# EUROPEAN PATENT APPLICATION

(11) **EP 4 635 927 A1**
(43) Date of publication of application: **22.10.2025**
(21) Application number: 24171245.4
(22) Date of filing: 19.04.2024
(51) Int. Cl.: C04B 26/16, C04B 28/04, C04B 26/32

(54) **SILANE-FUNCTIONAL POLYISOCYANATES FOR MULTI-COMPONENT CHEMICAL FASTENING SYSTEMS BASED ON ISOCYANATE-AMINE ADDUCTS**

(71) Applicant: Hilti Aktiengesellschaft, 9494 Schaan (LI)
(72) Inventor: Pschenitza, Markus, 87600 Kaufbeuren (DE); Kumru, Memet-Emin, 86199 Augsburg (DE)
(74) Representative: Hilti Aktiengesellschaft Corporate Intellectual Property

(57) **Abstract**

The present invention relates to a multi-component resin system comprising at least one component (A) and at least one component (B), wherein at least one component (A) comprises at least one aliphatic and/or aromatic polyisocyanate having an average NCO functionality of 2 or higher, wherein at least one component (8) comprises at least one amine reactive to isocyanate groups having an average NH functionality of 2 or higher, characterized in that at least one component (A) and/or at least one component (8) comprises at least one silane-functional polyisocyanate obtainable by reacting (A1) at least one polyisocyanate (I) with (A2) at least one compound of the general formula (II) R¹(R¹O)₂Si(CH₂)*ₘ*NHR² (II) and/or of general formula (III) (R¹O)₃Si(CH₂)*ₙ*NHR² (III). The present invention further relates to a mortar composition prepared by mixing at least one component (A) and at least one component (8) of the multi-component resin system according to the present invention and the use thereof for chemically fixing anchoring means in drilled holes or for structural bonding. Finally, present invention relates to the use of at least one silane-functional polyisocyanate in a multi-component resin system according to the present invention to increase the bond stress of an anchoring means chemically fixed by said multi-component resin system in a drilled hole.

## Description

The present invention relates to a multi-component resin system comprising at least one component (A) and at least one component (B), wherein at least one component (A) comprises at least one aliphatic and/or aromatic polyisocyanate having an average NCO functionality of 2 or higher, wherein at least one component (B) comprises at least one amine reactive to isocyanate groups having an average NH functionality of 2 or higher, characterized in that at least one component (A) and/or at least one component (B) comprises at least one silane-functional polyisocyanate obtainable by reacting (A1) at least one polyisocyanate (I) with (A2) at least one compound reactive towards isocyanate groups of the general formula (II) R¹(R¹O)₂Si(CH₂)*ₘ*NHR² (II) and/or of general formula (III) (R¹O)₃Si(CH₂)*ₙ*NHR² (III). The present invention further relates to a mortar composition prepared by mixing at least one component (A) and at least one component (B) of the multi-component resin system according to the present invention and the use thereof for chemically fixing anchoring means in drilled holes or for structural bonding. Finally, present invention relates to the use of at least one silane-functional polyisocyanate in a multi-component resin system according to the present invention to increase the bond stress of an anchoring means chemically fixed by said multi-component resin system in a drilled hole.

### Background

A typical construction jobsite is often open to the weather elements, such as rain, snow and elevated humidity causing the concrete elements to retain excess moisture. Even in closed or shielded from the weather jobsites, concrete elements/substrate may comprise water, often in suboptimal amounts for effective installation of chemical mortars. It is well known that chemical mortars and their mechanical and/or chemical performance can be greatly affected by water. This is described in Cook, R. A., Konz, R. C., "Factors Influencing Bond Strength of Adhesive Anchors," ACI Structural Journal, 2001, 98, 76-86.

Usually, binder systems based on radically curing compounds such as methacrylate resins or based on epoxy resins reacted with amine curing agents are used for the production of mortars for the chemical fastening of structural elements, such as anchor rods, reinforcing bars and screws in boreholes. There are countless commercially available products based on these binder systems.

However, the known binder systems show inadequate properties especially under critical external conditions, such as elevated temperatures, uncleaned boreholes, moist or water-filled boreholes, diamond-drilled boreholes, boreholes in cracked concrete, etc.

In addition to the further development and improvement of existing binder systems, efforts are therefore also being made to investigate binder systems other than those mentioned above with regard to their suitability as a basis for mortar compounds for chemical fixing. For example, EP 3 447 078 A1 describes a chemical anchor made from a multicomponent compound comprising a polyisocyanate component and a polyaspartic ester component. When the two components are mixed, polyurea is formed in a polyaddition reaction, which forms the binder of the mortar mass.

The disadvantage of these mortar compounds is that the polyaspartic acid esters used lead to insufficient crosslinking and already soften strongly at temperatures of 80 °C and accordingly show little performance at high temperatures. In addition, the cured specimens are not base-stable.

To circumvent these drawbacks, a multicomponent resin system was developed which, starting from EP 3 447 078 A1, uses an amine with an average NH functionality of 2 or greater instead of the polyaspartic ester, as described in EP 3 882 292 A1.

Thus, there is still the need for improvement of bond stress of chemical anchors based on isocyanate-amine (i.e., polyurea) based mortars, in particular, under wet conditions.

### Description of the invention

In view of this, there is a need in the art for isocyanate amine-based mortars with a lower sensitivity to the presence of water, i.e., that do not weaken so strongly in damp-holes or even water-filled boreholes. Thus, is an object of the present invention to provide isocyanate-amine based mortars showing an improved bond stress in wet conditions.

The above object underlying the present invention is solved by a multi-component resin system comprising at least one component (A) and at least one component (B), wherein the component (A) comprises at least one aliphatic and/or aromatic polyisocyanate having an average NCO functionality of 2 or higher, wherein the component (B) comprises at least one amine reactive to isocyanate groups having an average NH functionality of 2 or higher, characterized in that the component (A) and/or the component (B) comprises at least one silane-functional polyisocyanate according to the present invention and any one of the embodiments as disclosed herewith.

The present invention also relates to the use of a multi-component resin system according to the present invention for chemically fixing anchoring means in drilled holes or for structural bonding. Furthermore, the present invention relates to use of at least one silane-functional polyisocyanate according to any one of the embodiments as disclosed herewith in a multi-component resin system according to the present invention to increase the bond stress of an anchoring means chemically fixed by said multi-component resin system in a drilled hole.

In another embodiment, the present invention relates to a method of fixing an anchoring element in a hole or crevice in a building substrate, comprising introducing the multi-component resin system according to the present invention and an anchoring element into the hole or crevice, and allowing the multi-component resin system to cure.

It has been surprisingly found by the present inventors that the bond stress of the chemical anchor was improved in wet concrete when at least one silane-functional polyisocyanate according to the present invention and any one of the embodiments as described herewith is comprised in a multi-component resin system according to the present invention. Thus, the multi-component resin system material according to the present invention shows lower moisture sensitivity regarding the bond stress.

In the context of the present invention, the terms used herein and in the following description have the following meanings:
- "*Isocyanates*" are compounds that have a functional isocyanate group -N=C=O and are characterized by the structural unit R-N=C=O.
- "*Polyisocyanates*" are compounds that have at least two functional isocyanate groups -N=C=O; diisocyanates, which are also covered by the definition of polyisocyanate, are characterized, for example, by the structure O=C=N-R-N=C=O and thus have an NCO functionality of 2.
- "*Average NCO functionality*" describes the number of isocyanate groups in the compound; in the case of a mixture of isocyanates, the "averaged NCO functionality' describes the average number of isocyanate groups in the mixture and is calculated according to the formula: averaged NCO functionality (mixture) = I average NCO functionality (isocyanate i) / nᵢ, i.e. the sum of the average NCO functionality of the individual components divided by the number of individual components.
- "*Component (A)*" is a component of the multi-component resin system which comprises at least one polyisocyanate and optionally at least one filler and/or at least one rheology additive and/or further additives.
- "*Amines*" are compounds which have a functional NH group, are derived from ammonia by replacing one or two hydrogen atoms with hydrocarbon groups and have the general structures RNH₂ (primary amines) and R₂NH (secondary amines) (see: IUPAC Compendium of Chemical Terminology, 2nd ed. (the "Gold Book"), compiled by A. D. McNaught and A. Wilkinson, Blackwell Scientific Publications, Oxford (1997)). The compound class of polyaspartic acid esters is explicitly excluded from the term amines in the context of the present inventions. These are defined separately under the term polyaspartic acid esters.
- "*NH functionality*" describes the number of active hydrogen atoms that can react with an isocyanate group in an amino group.
- "*Average NH functionality*" describes the number of active hydrogen atoms that can react with an isocyanate group in an amine and results from the number and NH functionality of the amino groups contained in the compound, i.e. the amine; in the case of a mixture of amines, the "averaged NH functionality' describes the average number of active hydrogen atoms in the mixture and is calculated according to the formula: averaged NH functionality (mixture) = I average NH functionality (amine i) / nᵢ, i.e. the sum of the average NH functionality of the individual components divided by the number of individual components.
- The term "*polyaspartic acid esters*" refers to compounds of the general formula: 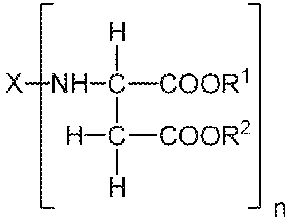 in which
   R¹ and R² can be the same or different and represent an organic group which is inert to isocyanate groups,
   X represents an n-valent organic group which is inert to isocyanate groups, and
   n represents an integer of at least 2, preferably from 2 to 6, more preferably from 2 to 4 and particularly preferably 2.
- "*Component (B)*" is a component of the multi-component resin system which comprises at least one amine and optionally at least one filler and/or at least one rheology additive and/or further additives.
- "*Isocyanate amine adducts*" are polymers that are formed by the polyaddition reaction of isocyanates with amines. The isocyanate amine adducts according to the invention are preferably polyureas which comprise at least one structural element of the form [-NH-R-NH-CO-NH-R'-NH-].
- "*Aliphatic compounds*" are acyclic or cyclic, saturated, or unsaturated carbon compounds, excluding aromatic compounds.
- "*Cycloaliphatic compounds*" or "*alicyclic compounds*" are compounds having a carbocyclic ring structure, excluding benzene derivatives or other aromatic systems.
- "*Araliphatic compounds*" are aliphatic compounds having an aromatic backbone such that, in the case of a functionalized araliphatic compound, a functional group that is present is bonded to the aliphatic rather than the aromatic part of the compound.
- "*Aromatic compounds*" are compounds which follow Hückel's rule (4n+2).
- "*Mortar composition*" refers to the composition that is obtained by mixing the isocyanate component (component (A)) and the amine component (component (B)) and as such can be used directly for chemical fastening.
- "*Filler*" refers to an organic or inorganic, in particular inorganic, compound.
- "*Rheology additive*" refers to additives which are able to influence the viscosity behavior of the isocyanate component (component (A)), the amine component (component (B)) and the multi component resin system during storage, application and/or curing. The rheology additive prevents, inter alia, sedimentation of the fillers in the polyisocyanate component (component (A)) and/or the amine component (component (B)). It also improves the miscibility of the components and prevents possible phase separation.
- "*Temperature resistance*" refers to the change in the bond stress of a cured mortar composition at an elevated temperature compared with the reference bond stress. In the context of the present invention, the temperature resistance is specified in particular as the ratio of the bond stress at 80°C to the reference stress.
- The terms "a" or "an" as articles preceding a chemical compound class mean that one or more compounds falling under that chemical compound class may be meant. In a preferred embodiment, these articles mean only a single compound, the term "*at least one*" means numerically "one *or more*"*.* In a preferred embodiment, the term numerically means "one", the terms "*include*" and "*comprising*" mean that there may be other components in addition to those mentioned. These terms are meant inclusively and therefore include "*consisting of*"*.* "*Consisting of*" is meant conclusively and means that no further constituents may be present. In an embodiment, the terms "*comprise*" or "*comprising*" mean "*consisting of*", a range delimited by numbers, e.g., "*from 80 °C to 120 °C*" means that the two corner values and each value within that range are individually disclosed.
- The term "*at least one*" numerically means "one or more". It is preferred that the term means "one", in other embodiments it could also mean two, three, four, or five, etc.

As stated above, the present invention relates in one embodiment to a multi-component resin system material. "*Multi-component*" systems in the sense of the present invention contain several components stored separately from each other, so that curing of the ingredients contained in the components occurs only after all the components have been mixed together. In particular, the multi-component resin system material according to the invention contains at least one component (A) comprising at least one hardenable isocyanate resin, and at least one component (B) comprising a hardening agent for the isocyanate resin of component (A). In a preferred embodiment, the multi-component resin system according to the invention is a two-component resin system. Thus, in one embodiment, the present invention relates to a multi-component resin system as defined above in the form of a two-component resin system consisting of components (A) and (B).

Preferably, the multi-component resin system of the present invention is free of any polyaspartic acid ester. The presence of polyaspartic acid esters in isocyanate-amine-based binder systems, which are used in mortar compounds for chemical fixing, has a negative influence on the temperature robustness of the hardened mortar compounds.

In particular, such systems exhibit greatly reduced bond strength at elevated temperatures, such as 80 °C. Thus, it is essential that the multi-component resin system, and in particular the amine component (component (B)) of the multi-component resin system, is free from polyaspartic esters. The term "*free of polyaspartic acid esters*" as used in the present application means that the proportion of polyaspartic acid esters in the multi-component resin system is preferably less than 2 wt.-%, more preferably less than 0.5 wt.-% and even more preferably less than 0.1 wt.-%, in each case based on the total weight of the multi-component resin system. The presence of polyaspartic acid esters in the above weight percentage ranges can be attributed to potential impurities. Particularly preferably, however, the percentage of polyaspartic acid esters in the multi-component resin system is 0.0 wt.-% based on the total weight of the multi-component resin system.

In another preferred embodiment of the present invention, the total filling ratio of a mortar mass prepared by mixing the isocyanate component (A) and the amine component (B) is in a range of 25 to 85%, preferably 35 to 75%, more preferably 37 to 60%, most preferably 40 to 50%, based on the total weight of the multi-component resin system. Further embodiments of the present invention are described in the following detailed description and the appended claims.

Present invention provides a multi-component resin system comprising at least one component (A) and at least one component (B), wherein at least one component (A) comprises at least one aliphatic and/or aromatic polyisocyanate having an average NCO functionality of 2 or higher, wherein at least one component (B) comprises at least one amine reactive to isocyanate groups having an average NH functionality of 2 or higher, characterized in that at least one component (A) and/or at least one component (B) comprises at least one silane-functional polyisocyanate obtainable by reacting
(A1) at least one polyisocyanate (I) with
(A2) at least one compound reactive towards isocyanate groups of the general formula (II)

   R¹(R¹O)₂Si(CH₂)*ₘ*NHR² (II)
and/or with a trialkoxyaminosilane of general formula (III)

   (R¹O)₃Si(CH₂)*ₙ*NHR² (III),
wherein the radicals R¹ independently of one another are selected from C₁-C₂₀-alkyl or C₆-C₂₀-aryl, n and m are each integers between 1 and 4,
the radicals R² independently of one another are selected from -H, C₁-C₂₀-alkyl, C₃-C₁₂-cycloalkyl, and -CHR³CH₂COOR⁴,
the radicals R³ independently of one another are selected form H, C₁-C₂₀-alkyl and -COOR⁴, and
radicals R⁴ independently of one another represent C₁-C₂₀-alkyl.

It is preferred that R¹ independently of one another are selected from methyl and ethyl, more preferably R¹ is methyl.

It is also preferred that R² is -H, wherein m is 3, and wherein n is 3. Thus, it is particularly preferred that general formula (II) is Me(MeO)₂Si(CH₂)₃NH₂ and that the general formula (III) is (MeO)₃Si(CH₂)₃NH₂.

Thus, at least one silane-functional polyisocyanate obtainable as presently described is functionalized with dialkoxysilane groups or with a mixture of trialkoxy- and dialkoxysilane groups. It is particularly preferred that at least one silane-functional polyisocyanate is comprised in at least one component (A).

According to the present invention it is preferred that polyisocyanate (I) is an oligomeric polyisocyanate based on monomeric diisocyanate of the general formula O=C=N-R-N=C=O, wherein R is aliphatic, cycloaliphatic, or aromatic radical. It is preferred that said monomeric diisocyanates are selected from the group comprising 1,4-diisocyanatobutane (BDI), 1,5-diisocyanatopentane (PDI), hexamethylene 1,6-diisocyanate (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-iso-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- and 1,4-bis(isocyanatomethyl)benzene (xylylene diisocyanate; XDI), 1,3- and 1,4-bis(1-isocyanato-1-methylethyl)benzene (TMXDI), bis(4-(1-isocyanato-1-methylethyl)phenyl) carbonate, 2,4- and 2,6-diisocyanatotoluene (TDI), 2,4'- and 4,4'-diisocyanatodiphenylmethane (MDI), 1,5-diisocyanatonaphthalene and mixtures of two or more thereof. It is particularly preferred that said monomeric diisocyanate is selected from 1,5-diisocyanatopentane, hexamethylene 1,6-diisocyanate, isophorone diisocyanate or a mixture of two or more thereof.

It is preferred that the polyisocyanate (I) is an oligomeric polyisocyanate based on isophorone diisocyanate or hexamethylene diisocyanate. Thus, it is particularly preferred that the polyisocyanate (I) is an oligomeric diisocyanate based on hexamethylene diisocyanate and having at least one isocyanurate, biurent, allophanate and/or uretidone structural unit. Thus, the polyisocyanate (I) is prepared by trimerization of same or different diisocyanates of the general formula O=C=N-R-N=C=O as listed above by reacting a portion of the isocyanate groups in a presence of a suitable catalyst. Polyisocyanate (I) is also available commercially, such as Desmodur^{®} XP 2565 (polyisocyanate based on isophorone diisocyanate with isocyanurate and allophanate groups; NCO content approx. 12.0 %) and Desmodur^{®} N 3300 (polyisocyanate based on hexamethylene diisocyanate with isocyanurate groups, NCO content approx. 21.8%). Preparation of polyisocyanate (I) is also known in the art and is disclosed in EP 0 649 866 A1.

Synthesis the silane-functional polyisocyanate as presently claimed and described herewith is well known in the art and is disclosed in US 2020/0354570 A1 and EP 4 108 694 A1.

According to the present invention "silane-functional" indicates a presence of at least one Si-bound hydrolysable group such as R¹(R¹O)₂Si- and/or (R¹O)₃Si-, wherein R¹ independently of one another are selected from C₁-C₂₀-alkyl or C₆-C₂₀-aryl, preferably wherein R¹ is methyl or ethyl, more preferably wherein R¹ is methyl. It is preferred that at least one Si-bound hydrolysable group is Me(MeO)₂Si- or (MeO)₃Si-.

It is preferred that at least one silane-functional polyisocyanate is functionalized with dialkoxysilane groups or with a mixture of trialkoxy- and dialkoxysilane groups, more preferably functionalized with trimethoxy and dimethoxysilane groups.

It is preferred that at least one silane-functional polyisocyanate is a silane-functional aliphatic, cycloaliphatic or aromatic polyisocyanate based on 1,4-diisocyanatobutane (BDI), 1,5-diisocyanatopentane (PDI), hexamethylene 1,6-diisocyanate (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-iso-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- and 1,4-bis(isocyanatomethyl)benzene (xylylene diisocyanate; XDI), 1,3- and 1,4-bis(1-isocyanato-1-methylethyl)benzene (TMXDI), bis(4-(1-isocyanato-1-methylethyl)phenyl) carbonate, 2,4- and 2,6-diisocyanatotoluene (TDI), 2,4'- and 4,4'-diisocyanatodiphenylmethane (MDI), 1,5-diisocyanatonaphthalene and mixtures of two or more thereof. It is particularly preferred that at least one silane-functional polyisocyanate is a silane-functional aliphatic and/or cycloaliphatic polyisocyanate based on 1,5-diisocyanatopentane, hexamethylene 1,6-diisocyanate, isophorone diisocyanate or a mixture of two or more thereof.

It is preferred that at least one silane-functional polyisocyanate is a silane-functional aliphatic polyisocyanate based on hexamethylene diisocyanate, wherein polyisocyanate comprises at least one isocyanurate, biurent, allophanate, uretidone structural unit and combinations of two or more thereof.

It is particularly preferred that at least one silane-functional polyisocyanate is a commercially available product Desmodur ^{®} 2873.

It is preferred that the multi-component resin system according to any one of the embodiments disclosed herewith comprises at least one silane-functional polyisocyanate as defined any of the above embodiments is in the range of from 3 to 20 wt.-% based on the total weight at least one component (A), preferably in the range of from 5 to 13 wt.-%, more preferably in the range of from 8 to 11 wt.-%.

It is possible that component (B) comprises at least one silane-functional polyisocyanate, preferably in an encapsulated form, or in another format that would prevent isocyanate groups of at least one silane-functional polyisocyanate from reacting with the amines in component (B) prior to the mixing of component (A) and component (B).

At least one silane-functional polyisocyanate may have two functions in the multi-component resin system. The silane groups as described herewith may act as an adhesion promotor, and the free isocyanate groups may react with the amines in the component (B) thus acting also as a cross-linking agent.

### Component (A)

The multi-component resin system according to the invention comprises at least one component (A) and at least one component (B). Before use, the component (A) and the component (B) are provided separately from one another in a reaction-inhibiting manner.

At least one component (A) comprises at least one polyisocyanate. All aliphatic and/or aromatic isocyanates known to a person skilled in the art and having an average NCO functionality of 2 or more, individually or in any mixtures with one another, can be used as the polyisocyanate. The average NCO functionality indicates how many NCO groups are present in the polyisocyanate. Polyisocyanate means that two or more NCO groups are contained in the compound.

Suitable aromatic polyisocyanates are those having aromatically bound isocyanate groups, such as diisocyanatobenzenes, toluene diisocyanates, diphenyl diisocyanates, diphenylmethane diisocyanates, diisocyanatonaphathalenes, triphenylmethane triisocyanates, but also those having isocyanate groups that are bound to an aromatic group via an alkylene group, such as a methylene group, such as bis- and tris (isocyanatoalkyl) benzenes, toluenes and xylenes.

Preferred examples of aromatic polyisocyanates are: 1,3-phenylene diisocyanate, 1,4 phenylene diisocyanate, 2,4-toluylene diisocyanate, 2,5-toluylene diisocyanate, 2,6-toluylene diisocyanate, 1,3-xylylene diisocyanate, 1,4-xylylene diisocyanate, tetramethyl-1,3-xylylene diisocyanate, tetramethyl-1,4-xylylene diisocyanate, 1,3 bis(isocyanatomethyl)benzene, 1,4-bis(isocyanatomethyl)benzene, ethylphenyl diisocyanate, 2-dodecyl-1,3-phenylene diisocyanate, 2,4,6-triisopropyl-m-phenylene diisocyanate, 2,4,6-trimethyl-1,3-phenylene diisocyanate, 1,5 naphthylene diisocyanate, 3,3'-dimethyl-4,4'-biphenyl diisocyanate, 3,3'-dimethoxy-4,4' biphenyl diisocyanate, diphenylene methane 2,4'-diisocyanate, diphenylene methane-2,2'-diisocyanate, diphenylene methane-4,4' diisocyanate, triphenylmethane-4,4',4"-triisocyanate, 5-(p-isocyanatobenzyl)-2-methyl m-phenylene diisocyanate, 4,4-diisocyanato-3,3,5,5-tetraethyldiphenylmethane, 5,5' ureylene di-o-tolyl diisocyanate, 4-[(5-isocyanato-2-methylphenyl)methyl]-m-phenylene diisocyanate, 4-[(3-isocyanato-4-methylphenyl)methyl]-m-phenylene diisocyanate, 2,2' methylene-bis[6-(o-isocyanatobenzyl)phenyl] diisocyanate.

Aliphatic isocyanates which have a carbon backbone (without the NCO groups contained) of 3 to 30 carbon atoms, preferably 4 to 20 carbon atoms, are preferably used. Examples of aliphatic polyisocyanates are bis(isocyanatoalkyl) ethers or alkane diisocyanates such as methane diisocyanate, propane diisocyanates, butane diisocyanates, pentane diisocyanates, hexane diisocyanates (e.g. hexamethylene diisocyanate, HDI), heptane diisocyanates (e.g. 2,2-dimethylpentane-1,5-diisocyanate), octane diisocyanates, nonane diisocyanates (e.g. trimethyl HDI (TMDI), usually as a mixture of the 2,4,4- and 2,2,4-isomers), 2-methylpentane-1,5-diisocyanate (MPDI), nonane triisocyanates (e.g. 4-isocyanatomethyl-1,8-octane diisocyanate, 5 methylnonane diisocyanate), decane diisocyanates, decane triisocyanates, undecane diisocyanates, undecane triisocyanates, dodecane diisocyanates, dodecane triisocyanates, 1,3- and 1,4-bis-(isocyanatomethyl)cyclohexane (H6XDI), 3 isocyanatomethyl-3,5,5-trimethylcyclohexylisocyanate(isophoronediisocyanate,IPDI), bis-(4-isocyanatocyclohexyl)methane (H12MDI), bis-(isocyanatomethyl)norbornane (NBDI), 3(4)-isocyanatomethyl-1-methyl-cyclohexyl isocyanate (IMCI), octahydro-4,7 methano-1H-indenedimethyl diisocyanate, norbornene diisocyanate, 5-isocyanato-1-(isocyanatomethyl)-1,3,3-trimethylcyclohexane, ureylene-bis(p-phenylenemethylene-p phenylene)diisocyanate.

Particularly preferred isocyanates are hexamethylene diisocyanate (HDI), trimethyl HDI (TMDI), pentane diisocyanate (PDI), 2-methylpentane-1,5-diisocyanate (MPDI), 3-isocyanatomethyl-3,5,5-trimethylcyclohexylisocyanate (isophorone diisocyanate; IPDI), 1,3- and 1,4-bis-(isocyanatomethyl)cyclohexane (HeXDI), bis-(isocyanatomethyl)-norbornane (NBDI), 3(4)-isocyanatomethyl-1-methyl cyclohexyl isocyanate (IMCI) and/or 4,4'-bis(isocyanatocyclohexyl)methane (H12MDI) or mixtures of these isocyanates.

Even more preferably, the polyisocyanates are present as prepolymers (preferably homopolymers), biurets (preferably diisoxyanate-biuret-addition products), isocyanurates, iminooxadiazinediones, uretdiones and/or allophanates, which can be produced by oligomerizing difunctional isocyanates as described above or by reacting the isocyanate compounds as described above with polyols or polyamines, individually or as a mixture, and which have an average NCO functionality of 2 or more. Preferably, the average NCO functionality is in the range of from 2.5 to 5.5, more preferably 2.7 to 4.0, and most preferably 2.9 to 3.6.

Examples of suitable, commercially available isocyanates are Desmodur^{®} N 3900, Desmodur^{®} N 100, Desmodur^{®} N 3200, Desmodur^{®} N 3300, Desmodur^{®} ultra N 3600, Desmodur^{®} N 3700, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551, Desmodur^{®} XP 2838, Desmodur^{®} XP 2840, Desmodur^{®} N3500, Desmodur^{®} NZ 300, Desmodur^{®} E 30600, Bayhydur XP 2547, Bayhydur XP 2451/1, Bayhydur Ultra 307 Desmodur^{®} VL, Desmodur^{®} VL 50, Desmodur^{®} VL 51, Desmodur^{®} ultra N 3300, Desmodur^{®} eco N 7300, Desmodur^{®} E23, Desmodur^{®} E XP 2727, Desmodur^{®} E 2863 XP, Desmodur^{®} H, Desmodur^{®} VKS 20 F, Desmodur^{®} 44V20I, Desmodur^{®} 44P01, Desmodur^{®} 44V70 L (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (jeweils erhältlich von Vencorex), Basonat HB 100, Basonat HI 100, Basonat HI 100 NG, Basonat HI 2000 NG (jeweils erhältlich von BASF), Takenate 500, Takenate 600, Stabio D-376N (jeweils erhältlich von Mitsui), Duranate 24A-100, Duranate TPA-100, Duranate THA-100 (jeweils erhältlich von Asahi Kasai), Coronate HXR, Coronate HXLV, Coronate HX, Coronate HK (all available from Tosoh).

One or more polyisocyanates are contained in the component (A) preferably in a proportion of from 20 to 100 wt.-%, more preferably in a proportion of from 30 to 90 wt.-%, more preferably in a proportion of from 35 to 65 wt.-%, more preferably in a proportion of from 25 to 30 wt.-% based on the total weight of the component (A).

Preferably, the degree of filling of the component (A) is 20 to 90 wt.-%, more preferably 40 to 80 wt.-%, more preferably 55 to 70 wt.-%, more preferably 60 to 70 wt.-% based on the total weight of the component (A).

### Component (B)

The component (B), which is provided separately from the component (A) in the multi-component resin system in a reaction-inhibiting manner, comprises at least one amine which is reactive to isocyanate groups of the component (A) and has an average NH functionality of 2 or more.

According to a preferred embodiment, the amine which is reactive to isocyanate groups is selected from the group consisting of aliphatic, alicyclic, araliphatic and aromatic amines, particularly preferably from the group consisting of alicyclic and aromatic amines.

Examples of suitable amines which are reactive to isocyanate groups are given below, but without restricting the scope of the invention. These can be used either individually or in any mixtures with one another. Examples are: 1,2 diaminoethane(ethylenediamine), 1,2-propanediamine, 1,3-propanediamine, 1,4-diaminobutane, 2,2-dimethyl-1,3-propanediamine (neopentanediamine), diethylaminopropylamine (DEAPA), 2-methyl-1,5-diaminopentane, 1,3-diaminopentane, 2,2,4- or 2,4,4-trimethyl-1,6-diaminohexane and mixtures thereof (TMD), 1,3-bis(aminomethyl)-cyclohexane, 1,2-bis(aminomethyl)cyclohexane, hexamethylenediamine (HMD), 1,2- and 1,4-diaminocyclohexane (1,2-DACH and 1,4-DACH), bis(4-amino-3-methylcyclohexyl)methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis(3-aminopropyl)methylamine, triethylenetetramine (TETA), tetraethylenepentamine (TEPA), pentaethylenehexamine (PEHA), 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornane diamine), dimethyldipropylenetriamine, dimethylaminopropyl-aminopropylamine(DMAPAPA), 2,4-diamino-3,5-dimethylthiotoluene (dimethylthiotoluene diamine DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 3-aminomethyl-3,5,5-trimethylcyclohexy amine (isophorone diamine (IPDA)), diaminodicyclohexylmethane (PACM), diethylmethylbenzenediamine (DETDA), 3,3'-diaminodiphenylsulfone (33 dapsone), 4,4'-diaminodiphenylsulfone (44 dapsone), mixed polycyclic amines (MPCA) (e.g. Ancamine 2168), dimethyldiaminodicyclohexylmethane (Laromin C260), 2,2-bis(4-aminocyclohexyl)propane, (3(4),8(9)bis(aminomethyldicyclo[5.2.1.02, 6]decane (mixture of isomers, tricyclic primary amines; TCD diamine), methylcyclohexyl diamine (MCDA), N,N'-diaminopropyl-2 methyl-cyclohexane-1,3-diamine, N,N'-diaminopropyl-4-methylcyclohexane-1,3 diamine, N-(3-aminopropyl)cyclohexylamine, and 2-(2,2,6,6-tetramethylpiperidin-4 yl)propane-1,3-diamine, 2-methylpentandiamine (e.g. DYTEK^{®} A), N-ethylaminopiperazine (N-EAP), N-aminoethyl-piperazine (N-AEP), 2,4,6-trimethyl-m-phenylendiamine, 2,4,6-tri(propan-2-yl)benzol-1,3-diamine, 4-ethyl-2,6-di(propan-2-yl)benzol-1,3-diamine, 4-methyl-2,6-di(propan-2-yl)benzol-1,3-diamine, 2,5-bis(methylsulfonyl)-1,4-benzoldiamine, chlorodiethylmethylbenzoldiamine (e.g. 5-chloro-4,6-diethyl-2-methyl-1,3-benzolediamine, 5-chloro-4,6-diethyl-6-methyl-1,3-benzole-diamine), 4-fluoro-5-(1-methylethyl)-1,2-benzoldiamine, 4,4'-methylen-bis[N-(1-methylpropyl)phenylamine], 4,4'-methylenbis(2,6-diethylaniline) (MBDA), 4,4'-methylenbis(N-sec-butylcyclohexanamine) (e.g. Clearlink^{®} 1000), 4,4'-methylen-bis[N-(1-methylpropyl)-3,3'-dimethylcyclohexaneamine] (e.g. Clearlink^{®} 3000), 4,4'-methylen-bis(3-chloro-2,6-diethylaniline) (MBCDA), the reaction product of 2-propenenitrile with 3-amino-1,5,5-trimethylcyclohexanmethanamine (e.g. Jefflink^{®} 745), 3-((3-(((2-cyanoethyl)amino)methyl)-3,5,5-trimethylcyclohexyl)amino)propiononitrile (e.g. Jefflink^{®} 136 or Baxxodur^{®} PC136), N,N'-di-sec-butyl-p-phenylendiamine, 2,4,6-trimethyl-m-phenylendiamine and 2,4,6-trimethyl-5-nitro-1,3-benzoldiamine as well as mixtures of two or more of these amines.

Particularly preferred amines are diethylmethylbenzenediamine (DETDA, such as Ethacure^{®} 100 Plus), 2,4-diamino 3,5-dimethylthiotoluene (dimethylthio-toluenediamine, DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 4,4'-methylene-bis[N (1-methylpropyl)phenylamine] (such as Unilink^{®} 4200), 4,4'-methylenebis(2,6-diethylaniline) (MBDA), 4,4'-methylenebis(N-sec-butylcyclohexanamine) (Clearlink@ 1000), 3,3'-diaminodiphenylsulfone (33 dapsone), 4,4'-diaminodiphenylsulfone (44 dapsone), N,N'-di-sec-butyl-p phenylenediamine (such as Unilink^{®} 4100), and 2,4,6-trimethyl-m-phenylenediamine, 4,4'-methylenebis(N-(1 methylpropyl)-3,3'-dimethylcyclohexanamine (Clearlink@ 3000), the reaction product of 2-propenenitrile with 3-amino-1,5,5-trimethylcyclohexanemethanamine (Jefflink@ 745), 3-((3-(((2-cyanoethyl)-amino)methyl)-3,5,5-trimethylcyclohexyl)amino)propiononitrile (Jefflink@ 136 or Baxxodur@ PC136), a mixture of DETDA and IPDA (e.g. Ethacure^{®} 270), a mixture of 4,4'-methylenebis(N-sec-butylaniline), 4,4'-methylenebis(2,6-diethylaniline) and diethylmethylbenzoldiamine (e.g. Ethacure^{®} 520), 4,4'-methylene-bis(3-chloro-2,6-diethylaniline) (MBCDA), chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), Aradur^{®} 223, Aradur^{®} 33225, Ancamide^{®} 506, Ancamine^{®} 2167, Ancamide^{®} 2426, Ancamide^{®} 3011, Ancamide^{®} 3419, Amicure^{®} IC-322, Epilox^{®}-Hardener H 14-50, Epilox^{®}-Hardener H15-60, Epilox^{®}-Hardener M1148, EPIKURE Curing Agent 3050, EPIKURE Curing Agent F205, Ethacure^{®} 300, Ethacure^{®} 100 Plus.

Most particularly preferred amines are 4,4'-methylene-bis[N-(1 methylpropyl)phenylamine], an isomer mixture of 6-methyl-2,4 bis(methylthio)-phenylene-1,3-diamine and 2-methyl-4,6-bis(methylthio)phenylene-1,3 diamine (Ethacure^{®} 300), diethyltoluoldiamine (DETDA, e.g. Ethacure^{®} 100 Plus), 4,4'-methylene-bis[N-(1-methylpropyl)-phenylamine] (e.g. Unilink^{®} 4200), 4,4'-methylene-bis(3-chloro-2,6-diethylaniline) (MBCDA), chlorodiethylmethylbenzolediamine, Aradur^{®} 33225, Ancamide^{®} 3419, Epilox^{®}-Hardener H 14-50. Preferred amines are DMTDA; DETDA, and mixtures therefrom. Most preferred amines are aromatic diamines such as Ethacure^{®} 300.

One or more amines are contained in the component (B) preferably in a proportion of from 20 to 100 wt.-%, more preferably in a proportion of from 30 to 70 wt.-%, more preferably in a proportion of from 35 to 70 wt.-%, and even more preferably 50 to 65 wt.-% based on the total weight of the component (B).

Preferably, the degree of filling of the component (B) is 10 to 70 wt.-%, more preferably 40 to 50 wt.-%, more preferably 20 to 35 wt.-%, more preferably 25 to 33 wt.-% based on the total weight of the component (B).

The quantity ratios of the polyisocyanate and the amine of the multi-component resin system are preferably selected such that the ratio of the average NCO functionality of the polyisocyanate to the average NH functionality of the amine is between 0.3 and 2.0, preferably between 0.5 and 1.8, more preferably between 0.5 and 1.5, even more preferably between 0.7 and 1.5, more preferably 0.7 to 1.3, more preferably 0.75 to 1.65, more preferably the ratio is 1.2 to 1.

A mixture of different polyisocyanates and/or different amines can be used to adjust the rate of curing. In this case, their quantity ratios are selected such that the ratio of the averaged NCO functionality of the isocyanate mixture to the averaged NH functionality of the amine mixture is between 0.3 and 2.0, preferably between 0.5 and 1.8, more preferably between 0.5 and 1.5, even more preferably between 0.7 and 1.5 and most preferably between 0.7 and 1.3, more preferably 0.75 to 1.65, more preferably the ratio is 1.2 to 1.

### Conventional Filler

The multi-component resin system material according to the present invention preferably comprises at least one conventional filler.

Inorganic fillers, in particular cements such as Portland cement or aluminate cement and other hydraulically setting inorganic substances, quartz, glass, corundum, porcelain, earthenware, barite, light spar, gypsum, talc and/or chalk and mixtures thereof are preferably used as conventional filler. The inorganic fillers can be added in the form of sands, powders, or molded bodies, preferably in the form of fibers or balls. A suitable selection of the fillers with regard to type and particle size distribution/(fiber) length can be used to control properties relevant to the application, such as rheological behavior, press-out forces, internal strength, tensile strength, pull-out forces, and impact strength. Suitable fillers may be selected from barite powders, preferably high density barite powders. It is preferred that barite powders are selected from the group consisting of barium sulfate (type 1 and/or 2), Albawhite 10, Albawhite 40, Albawhite 60, Albawhite 70, Albawhite 80, Albawhite 90, Albawhite 100, Albawhite 110, Barytmehl N, Barytmehl G, Schwerspat C10, Schwerspat C14 and combinations of two or more thereof. Particularly suitable fillers are quartz powders, fine quartz powders and ultra-fine quartz powders that have not been surface-treated, such as Millisil@ W3, Millisil@ W6, Millisil@ W8 and Millisil@ W12, preferably Millisil@ W12. Silanized quartz powders, fine quartz powders and ultra-fine quartz powders can also be used. These are commercially available, for example, from the Silbond@ product series from Quarzwerke. The product series Silbond@ EST (modified with epoxysilane) and Silbond@ AST (treated with aminosilane) are particularly preferred. Furthermore, it is possible to use conventional filler based on aluminum oxide such as aluminum oxide ultra-fine fillers of the ASFP type from Denka, Japan (d50 = 0.3 pm) or grades such as DAW or DAM with the type designations 45 (d50 < 0.44 pm), 07 (d50 > 8.4 pm), 05 (d50 < 5.5 pm) and 03 (d50 < 4.1 pm). Moreover, the surface treated fine and ultra-fine fillers of the Aktisil AM type (treated with aminosilane, d50 = 2.2 pm) and Aktisil EM (treated with epoxysilane, d50 = 2.2 pm) from Hoffman Mineral can be used. The fillers can be used individually or in any mixture with one another.

It is preferred that the high-density fillers, such as barite powders as disclosed herewith, are comprised in the component (A) and/or (B). It is preferred that the high-density fillers such as barite powders as disclosed herewith, more preferably Albawhite 10 and Albawhite 100, are comprised in the component (B).

The conventional filler may optionally be modified. For example, the filler may be modified, i.e., surface modified, with an adhesion promoter as described below.

The particle size of the conventional filler is not especially important according to the present invention. For example, the conventional filler may have a median particle size d50 of 100 µm or less, or 50 µm or less, such as 20 µm or less.

The filler may be comprised in component (A) and/or component (B), and preferably is comprised in both component (A) and component (B).

It is preferred that at least one component (A) comprises at least one conventional filler according to any one of the embodiments as disclosed herewith in the amount of from 20 to 90 wt.-% based on the total weight of at least one component (A), preferably in the range of from 30 to 70 wt.-%, more preferably in the range of from 45 to 60 wt.-%, more preferably in the range of from 50 to 60 wt.-%.

It is preferred that at least one component (B) comprises at least one conventional filler according to any one of the embodiments as disclosed herewith in the amount of from 10 to 80 wt.-% based on total the weight of at least one component (B), preferably in the range of from 15 to 50 wt.-%, more preferably in the range of from 20 to 30 wt.-%.

### Functional Filler

It is preferred that the multi-component resin system according to the present invention further comprises a functional filler. Preferably, the multi-component resin system of the present invention comprises the functional filler in addition to a conventional filler. Preferably, the amount of functional filler or the combined amount of functional filler and conventional filler in the multi-component resin system is 30 to 60 wt.-%, based on the total weight of the multi-component resin system, preferably 35 to 60 wt.-%, and more preferably 40 to 50 wt.-%.

Also preferably, the functional filler is present in the multi-component resin system in an amount in the range of from 1.0 to 50.0 wt.-%, more preferably from 1.0 to 30.0 wt.-%, more preferably from 1.0 to 16.0 wt.-%, more preferably from 1.0 to 7.0 wt.-%, and more preferably 1.0 to 4 wt.-% based on the total weight of the multi-component resin system.

Preferably, the functional filler is present in the multi-component resin system in addition to a conventional filler. It has been found that it is not necessary to provide the functional filler in such high amounts as a conventional filler usually is used. Hence preferably, the weight ratio of the functional filler to the conventional filler in the multi-component resin system according to the present invention is at least 0.01, preferably in the range of 0.01 to 0.25, more preferably in the range of from 0.01 to 0.20, and most preferably in the range of 0.04 to 0.1.

The functional filler can be introduced by being present in the component (A) and/or in the component (B). Preferably, the functional filler is introduced by being present in component (A). Hence, the component (A) preferably comprises the functional filler in an amount in the range of from 1.0 to 20.0 wt.-%, more preferably from 1.0 to 10.0 wt.-%, even more preferably from 2.0 to 8.0 wt.-%, and most preferably from 4.0 to 6.0 wt.-%, based on the total weight of the isocyanate component (A).

Preferably, the functional filler is a hygroscopic inorganic compound which acts as a desiccant. It is preferred that the functional filler is a molecular sieve and/or a zeolite.

The hydroscopic and desiccant properties of the functional filler according to any one of the embodiments as disclosed herewith serves to increase the storage stability of the component (A), and thus of the multi-component resin system of the present invention.

It is preferred that the zeolites used in the present invention are synthetic or natural zeolites and are generally characterized by the composition M^{n+x}_{/n} [(AlO2)⁻ₓ(SiO2)_{y}]·zH2O wherein N is the charge of M, usually 1 or 2, and M is a cation of an alkali or alkaline earth metal, in particular Na+, K+, Ca2+ and Mg2+.

The following can be used as zeolites:
Zeolith A (₁₂(AlO2)₁₂(SiO2)₁₂ · 27 H2O; K12((AlO2)₁₂(SiO2)₁₂) · 27 h2O),
Zeolith X (Na₈₆[(AlO2)₈₆(SiO2)₁₀₆] · 264 H2O),
Zeolith Y (Na₅₆[(AlO2)₅₆(SiO2)₁₃₆] · 250 H2O),
Zeolith L (k₉[(AlO2)₉(SiO2)₂₇] · 22 H2O),
Modernit (Na_{8,7}[(AlO2)_{8,7}(SiO2)_{39,3}] · 24 H2O),
Zeolith ZSM 5 (Na_{0,3H3,8}[(AlO2)_{4,1(}SiO2)_{91,9}]),
Zeolite ZSM 11 (Na_{0,1H1,7}[(AlO2)_{1,8}(SiO2)_{94,2}]). Of these, zeolite A, zeolite X, zeolite Y and
zeolite ZSM 5 and zeolite ZSM 11 are preferred.

The molecular sieve, especially the zeolite, can be used as a powder, granule or as a paste (e.g., 48-50% powder dispersed in castor oil).

The synthetic zeolite is preferably a synthetic zeolite comprising particles with a particle size of up to 250 µm, especially 5 µm to 24 µm. Synthetic zeolite has a pore size of about 5 Å to about 10 Å, especially about 3 Å to about 4 Å.

The specific surface area (BET) of the zeolite particles preferentially lies between 800 m²/g and 1000 m²/g.

The residual water content of the zeolite is below 2.5% w/w, preferably below 1.5% w/w, and the water absorption capacity is below 22 - 24% w/w.

It is possible to use a mixture of two or more different types of zeolite.

The molecular sieve, especially the zeolite, is preferably used in an amount of 3 to 35 wt.-%, preferably 3 wt.-% to 20 wt.-% and especially preferably in a quantity of 3 to 7 wt.-%, more preferably 4 to 6 wt.-% based on the total weight of the component (A).

It is preferred that the functional filler as described above is dried before its use and/or addition to the component (A).

It is particularly preferred that the functional filler is a synthetic zeolite, preferably an alkali aluminosilicate zeolite (e.g., Purmol^{®} 3ST). The functional filler according to any of the embodiments as disclosed herewith has the function of absorbing water, which aids in improving storage stability of component (A) and thus of the multi-component system according to the present invention.

In another embodiment, it is preferred that the functional filler is a hygroscopic, basic, inorganic compound. Even more preferably, the functional filler is a mineral, preferably a mineral derived from calcium, aluminum, or magnesium.

Preferably, the functional filler is selected from the list consisting of a calcium salt and a silicate. The calcium salt is selected from the list consisting of calcium oxide, calcium chloride, and calcium sulfate. More preferably, the functional filler is a silicate. Preferred silicates are aluminum silicates, magnesium silicates, and mixtures thereof. Aluminum silicates are preferably selected from the list consisting of hydrous aluminum phyllosilicates, preferably clay, most preferably clay brick powder, aluminosilicate, preferably zeolite. and Even more preferred are magnesium silicates, preferably hydrated magnesium silicates. It is preferred that the functional filler is a hydrated magnesium silicate, preferably selected from sepiolite and montmorillonite.

### Rheology additive

It is preferred that the multi-component resin system according to any one of the embodiments discloses herewith comprises at least one filler and at least one rheology additive in at least one component (A) and/or at least one component (B).

The flow properties are adjusted by adding rheology additives which, according to the invention, are used in the component (A) and/or the component (B). Suitable rheology additives are: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization.

It is preferred that the amount of at least one filler, preferably at least one functional filler and at least one conventional filler, and at least one rheology additive according to any one of the embodiments as disclosed herewith in at least one component (A) is in the range of from 30 to 90 wt.-% based on the total weight of at least one component (A), more preferably in the range of from 50 to 70 wt.-%, more preferably in the range of from 55 to 65 wt.-%, more preferably in the range of from 60 to 70 wt.-%.

It is preferred that the amount of at least one filler, preferably at least one functional filler and at least one conventional filler according to any one of the embodiments as disclosed herewith, and at least one rheology additive in at least one component (B) is in the range of from 10 to 80 wt.-% based on the total weight of at least one component (B), preferably in the range of from 20 to 40 wt.-%, more preferably in the range of from 25 to 35 wt.-%.

The proportion of one or more rheology additives in the component (A) is preferably from 0.1 to 3 wt.-%, more preferably from 0.1 to 1.5 wt.-%, based on the total weight of the component (A). The proportion of one or more rheology additives in the component (B) is preferably from 0.1 to 10 wt.-%, more preferably from 2 to 6 wt.-%, based on the total weight of the component (B).

### Adhesion promoter

It is preferred that the multi-component resin system according to any one of the embodiments disclosed herewith that at least one component (A) and/or at least one component (B) further comprise at least one adhesion promoter as an additional compound. It is preferred that at least one adhesion promotor is different from at least one silane-functional polyisocyanate according to any one of the embodiments as disclosed herewith. It is preferred that at least one adhesion promoter is in an amount ranging from 0.01 to 5 wt.-% based on the total weight of at least one component (A) and/or at least one component (B), preferably in the range of from 1 to 3 wt.-%.

In one embodiment of the multi-component resin system, the component (A) and/or the component (B) contains at least one silane which is different from at least one silane-functional polyisocyanate according to any one of the embodiments as disclosed herewith, as an adhesion promoter.

By using a silane, the cross-linking of the borehole wall with the mortar composition is improved such that the adhesion increases in the cured state.

Suitable adhesion promoters are selected from the group of silanes that have at least one Si-bound hydrolysable group. It is not necessary for the silane to comprise a further functional group in addition to the Si-bound hydrolysable group, such as an isocyanate group or an amino group. Nevertheless, in addition to the Si-bound hydrolysable group, the silane may comprise one or more identical or different further functional groups, such as an amino, mercapto, epoxy, isocyanato, alkenyl, (meth) acryloyl, anhydrido or vinyl group. The Si-bound hydrolysable group is preferably a CC alkoxy group and very particularly preferably a methoxy or ethoxy group.

Suitable silanes are selected from the group consisting of 3-aminopropyltrialkoxysilanes such as 3-aminopropyltrimethoxysilane and 3-aminopropyltriethoxysilane; 3 glycidyloxypropyltrialkoxysilanes such as 3-glycidyloxypropyltrimethoxysilane and 3 glycidyloxypropyltriethoxysilane; glycidyloxymethyltrimethoxysilane; 3 glycidyloxypropylmethyldimethoxysilane; bis-(3-trialkoxysilylpropyl) amines such as bis (3-trimethoxysilylpropyl) amine and bis-(3-triethoxysilylpropyl) amine; 3mercaptopropyltrialkoxysilanes such as 3-mercaptopropyltrimethoxysilane and 3-mercaptopropylmethyldimethoxysilane;3-(meth)acryloyloxyalkyltrialkoxysilanes such as3-(meth)acryloyloxypropyltrimethoxysilane,3-(meth)acryloyloxypropyltriethoxysilane; 3-(meth)acryloyloxymethyltrimethoxysilane, 3-(meth)acryloyloxymethyltriethoxysilane and 3-(meth)acryloyloxypropylmethyldimethoxysilane; alkenylalkoxysilanes such as vinylalkoxysilanes, e.g. vinyltrimethoxysilane and vinyltriethoxysilane; tetraalkoxysilanes such as tetraethoxysilane, tetramethoxysilane and tetrapropoxysilane; 2-(3,4 epoxycyclohexyl)ethyltrimethoxysilane, N-2-(aminoethyl)-3-aminopropylmethyl diethoxysilane, N-2-(aminoethyl)-3-aminopropyl-triethoxysilane, N-phenyl-3-aminoethyl 3-aminopropyl trimethoxysilane and mixtures of two or more thereof.

Particularly suitable silanes are selected from the group consisting of 3-aminopropyltrialkoxysilanes, 3-glycidyloxyalkyltrialkoxysilanes, bis (3-trialkoxysilylpropyl) amines, 3-mercaptopropyltrialkoxysilanes, 3 (meth)acryloyloxyalkyltrialkoxysi lanes, alkenylalkoxysilanes, tetraalkoxysilanes and mixtures of two or more thereof.

Most particularly suitable silanes are 3-glycidoxypropyldimethoxysilane, 3 glycidoxypropyltrimethoxysilane, 3-trimethoxysilylpropyl methacrylate and vinyltrimethoxysilane.

The silane can be contained in the multi-component resin system in an amount of up to 10 wt.-%, preferably from 0.1 to 5 wt.-%, more preferably from 0.5 to 3 wt.-%, based on the total weight of the multi-component resin system. The silane can be contained entirely in one component, i.e., the component (A) or the component (B), or be split between the two components, i.e., split between the component (A) and the component (B).

### Mortar Composition

Present invention also relates to a mortar composition prepared by mixing at least one component (A) and at least one component (B) of the multi-component resin system according to any of the preceding embodiments.

### Method of the present invention

Present invention further relates to a method of chemically fixing structural elements in drilled holes, wherein a mortar composition according to any one of embodiments disclosed herewith or a multi-component resin system according to any one of the embodiments disclosed herewith is used for chemical fixing.

### Use of the multi-component resin system

The multi-component resin system is preferably present in cartridges or film pouches which are characterized in that they comprise two or more separate chambers in which the component (A) and the component (B) are separately arranged in a reaction-inhibiting manner.

For the use as intended of the multi-component resin system, the component (A) and the component (B) are discharged out of the separate chambers and mixed in a suitable device, for example a static mixer or dissolver. The mixture of component (A) and component (B) (mortar composition) is then introduced into the optionally previously cleaned borehole by means of a known injection device. The fastening element to be fastened is then inserted into the mortar composition and aligned. The reactive constituents of the component (A) react with the amino groups of the component (B) by polyaddition such that the mortar composition cures under environmental conditions within a desired period of time, preferably within a few minutes or hours.

Thus, present invention also relates to a use of a mortar composition according to any one of the embodiments as disclosed herewith or a multi-component resin system according to any one of the embodiments as disclosed herewith for chemically fixing anchoring means in drilled holes or for structural bonding, preferably for fixing anchoring means in drilled holes or for structural bonding under wet conditions.

Finally, the present invention relates to the use of at least one silane-functional polyisocyanate in a multi-component resin system according to any one of the embodiments as disclosed herewith to increase the bond stress of an anchoring means chemically fixed by said multi-component resin system in a drilled hole.

### Cited prior art:

- Cook, R. A., Konz, R. C., "Factors Influencing Bond Strength of Adhesive Anchors," ACI Structural Journal, 2001, 98, 76- 86
- EP 3 447 078 A1
- US 2020/0354570 A1
- EP 4 108 694 A1
- EP 3 882 292 A1

### EXAMPLES

Unless stated otherwise, all constituents of the compositions that are listed here are commercially available and were used in the usual commercial quality.

**Table 1: Names of components and their description**

| **Name or abbreviation** | **Description** | **Supplier** |
|---|---|---|
| Tolonate^{™} HDT- LV LM | Aliphatic polyisocyanate based on hexamethylene diisocyanate trimer | Vencorex France |
| Desmodur^{®} 2873 | Silane-functional aliphatic polyisocyanate based on hexamethylene diisocyanate | Covestro AG |
| Ethacure^{®} 300 Curative (dimethylthiotoluenediamines 95-97%, monomethylthiotoluenediamine 2-3%; Equivalent weight with isocyanates 107) | Mixture of 3,5-di(methylthio)toluenediamine and 2,4-diamino-3,5-dimethylthiotoluene | Albermale Corporation |
| Dynasylan^{®} MEMO | 3-methacryloxypropyltrimethoxysilane | Evonik |
| Citrofol^{®} Al | Triethyl citrate | Jungbunzlauer Holding AG |
| Purmol^{®} 3ST | Synthetic zeolite | Zeochem AG |
| P10 | Quartz sand | Strobel Quarzsand GmbH |
| Cab-O-Sil^{®} TS-720 | Fumed silica | Cabot |
| Dyckerhoff Weiss CEM I 42,5R | Portland cement | Dyckerhoff GmbH, Amöneburg plant |
| Albawhite 10 | White barium sulfate extender | Sachtleben Minerals GmbH & CO. KG |
| Albawhite 100 | Extremely white barium sulfate extender | Sachtleben Minerals GmbH & CO. KG |

### Manufacture of components:

The components used in the examples and their proportions in wt.-% in relation to the total weight of A-component or B-component respectively. Both A-Component and B-Component were prepared using a dissolver (PC laboratory system, volume 1 L). After the respective liquid components were prepared in a beaker or a plastic container/bucket the fillers were added and initially mixed by hand with a wooden spatula. The plastic container or a beaker was then attached to the disc stirrer, the cover was closed, and a vacuum of 80 mbar was created to avoid the introduction of air pockets into the mass. The stirring process ran for eight minutes at 2,500 rpm. The masses were then filled in 3 : 1 two-component hard cartridges (2K cartridges) with a static mixer to free of air bubbles.

### Determination of bond stress in water-saturated concrete (B7):

To determine the composite stresses achieved with the mortar composition, a high-strength anchor threaded rod M12 was used, which was anchored into a hammer-drilled borehole with a diameter of 14 mm and a borehole depth of 72 mm with the two-component mortar composition according to the present invention in water-saturated C20/25 concrete slabs. The cleaning of the borehole is carried out by means of a vacuum (vac) cleaner and brush as follows: 1x vac/1x brushing/1x vac. To determine the bond stress, after a curing time of 48 h at a temperature of 23 °C, the failure load was determined by centrically pulling out the anchor threaded rod with tight support. The mean failure load was determined based on the results of five anchors.

**Table 2: Comparative example V1 and example according to the present invention A1**

| **Components in wt.-%** | **V1** | **A1** |
|---|---|---|
| **A-Component** | | |
| Tolonate^{™} HDT- LV LM | 33.5 | 28.5 |
| Desmodur^{®} 2873 | - | 9.5 |
| Dynasylan^{®} MEMO | 2 | 2 |
| Cab-O-Sil^{®} TS-720 | 1.2 | 1.2 |
| Purmol^{®} 3ST | 5 | 5 |
| Dyckerhoff Weiss CEM I 42,5R | 18 | 18 |
| Quartz sand (P10) | 40.3 | 35.8 |
| | | |

| **B-Component** | | |
|---|---|---|
| Ethacure^{®} 300 Curative | 58 | 58 |
| Citrofol^{®} AI | 14 | 14 |
| Cab-O-Sil^{®} TS-720 | 4 | 4 |
| Albawhite 100 | 16 | 16 |
| Albawhite 10 | 8 | 8 |
| | | |
| Isocyanate : amine ratio | 1.2 : 1 | 1.2 : 1 |
| Volume ratio | 3 : 1 | 3 : 1 |
| Curing time in h | 48 | 48 |
| Bond stress B7 in N/mm² | 25.8 | 27.4 |

Comparative example V1 has low bond stress in water-saturated concrete (B7). With the addition of a silane-functional polyisocyanate (e.g., Desmodur^{®} 2873) the B7 value has significantly improved in Example A1 according to the present invention. The filler content of A1 was adjusted in order to maintain the same isocyanate-amine ratio of 1.2 : 1 as in V1.

## Claims

1. A multi-component resin system comprising at least one component (A) and at least one component (B), wherein at least one component (A) comprises at least one aliphatic and/or aromatic polyisocyanate having an average NCO functionality of 2 or higher, wherein at least one component (B) comprises at least one amine reactive to isocyanate groups having an average NH functionality of 2 or higher, **characterized in that** at least one component (A) and/or at least one component (B) comprises at least one silane-functional polyisocyanate obtainable by reacting
(A1) at least one polyisocyanate (I) with
(A2) at least one compound reactive towards isocyanate groups of the general formula (II)
R¹(R¹O)₂Si(CH₂)*ₘ*NHR² (II)
and/or of general formula (III)
(R¹O)₃Si(CH₂)*ₙ*NHR² (III)
wherein the radicals R¹ independently of one another are selected from C₁-C₂₀-alkyl or C₆-C₂₀-aryl, n and m are each integers between 1 and 4,
the radicals R² independently of one another are selected from -H, C₁-C₂₀-alkyl, C₃-C₁₂-cycloalkyl, and -CHR³CH₂COOR⁴,
the radicals R³ independently of one another are selected form H, C₁-C₂₀-alkyl and -COOR⁴, and
radicals R⁴ independently of one another represent C₁-C₂₀-alkyl.

2. The multi-component resin system according to claim 1, wherein R¹ independently of one another are selected from methyl and ethyl, preferably R¹ is methyl.

3. The multi-component resin system according to claim 1 or 2, wherein R² is -H, wherein m is 3, and wherein n is 3.

4. The multi-component resin system according to any one of claims 1 to 3, wherein the polyisocyanate (I) is an oligomeric polyisocyanate based on isophorone diisocyanate or hexamethylene diisocyanate, preferably wherein the polyisocyanate is an oligomeric diisocyanate based on hexamethylene diisocyanate, preferably comprising at least one isocyanurate structural unit.

5. The multi-component resin system according to any one of claims 1 to 4, wherein the amount of at least one silane-functional polyisocyanate is in the range of from 3 to 20 wt.-% based on the total weight of at least one component (A), preferably in the range of from 5 to 13 wt.-%, more preferably in the range of from 8 to 11 wt.-%.

6. The multi-component resin system according to any one of claims 1 to 5, wherein at least one component (A) and/or at least one component (B) further comprise at least one adhesion promoter, in an amount ranging from 0.01 to 5 wt.-% based on the total weight of at least one component (A) and/or at least one component (B), preferably in the range of from 1 to 3 wt.-%, wherein at least one adhesion promoter is not at least one silane-functional polyisocyanate.

7. The multi-component resin system according to any one of claims 1 to 6, wherein at least one component (A) and/or at least one component (B) comprises at least one filler and at least one rheology additive.

8. The multi-component resin system according to claim 7, wherein the amount of at least one filler and at least one rheology additive in at least one component (A) is in the range of from 30 to 90 wt.-% based on the total weight of at least one component (A), more preferably in the range of from 50 to 70 wt.-%, more preferably in the range of from 55 to 65 wt.-%.

9. The multi-component resin system according to claim 7 or 8, wherein the amount of at least one filler and at least one rheology additive in at least one component (B) is in the range of from 10 to 80 wt.-% based on the total weight of at least one component (B), preferably in the range of from 20 to 40 wt.-%, more preferably in the range of from 25 to 35 wt.-%.

10. The multi-component resin system according to any one of claims 1 to 9, wherein at least one component (A) and at least one component (B) are present in a quantity ratio in which the average NCO functionality to the average NH functionality is between 0.3 and 2.0, and preferably 0.75 and 1.65.

11. The multi-component resin system according to any one of claims 1 to 10, **characterized in that** the multi-component resin system is a two-component resin system.

12. A mortar composition prepared by mixing at least one component (A) and at least one component (B) of the multi-component resin system according to any of the preceding claims.

13. A method of chemically fixing structural elements in drilled holes, wherein the mortar composition according to claim 12 or the multi-component resin system according to any one of claims 1 to 11 is used for chemical fixing.

14. A use of the mortar composition according to claim 12 or the multi-component resin system according to any one of claims 1 to 11 for chemically fixing anchoring means in drilled holes or for structural bonding, preferably for fixing anchoring means in drilled holes or for structural bonding under wet conditions.

15. A use of at least one silane-functional polyisocyanate in the multi-component resin system according to any one of claims 1 to 11 to increase the bond stress of an anchoring means chemically fixed by said multi-component resin system in a drilled hole.
